# EUROPEAN PATENT APPLICATION

(11) **EP 2 341 552 A2**
(43) Date of publication of application: **06.07.2011**
(21) Application number: 10165093.5
(22) Date of filing: 07.06.2010
(51) Int. Cl.: H01L 31/048

(54) **Supporting structure for supporting a plurality of solar panels and related solar tile module**

(30) Priority: 30.12.2009 TW 098145974
(71) Applicant: Axuntek Solar Energy, Pingtung County 900 (TW)
(72) Inventor: Lee, Shih-Wei, 843, Kaohsiung County (TW); Liang, Tien-Hsing, 111, Taipei City (TW); Hou, Chi-Hung, 100, Taipei City (TW); Chiu, Chen-Hai, 308, Hsinchu County (TW); Tseng, Chiu-An, 826, Kaohsiung County (TW)
(74) Representative: Becker Kurig Straus

(57) **Abstract**

A supporting structure (14) for supporting a plurality of solar panels (12) is disclosed. The supporting structure (14) includes a base (16) for supporting the plurality of solar panels (12), and a frame (18) disposed on the base (16). At least one accommodating space (1 85) is formed inside the frame (1 8) for accommodating the plurality of solar panels (12), so that the plurality of solar panels (12) is fixed on the base (16). The supporting structure (14) further includes a junction box (20) disposed on a side of the base (16) and between the adjacent solar panels (12). The supporting structure further (14) includes a plurality of transmission cables (22). Two ends of each transmission cable (22) are electrically connected to the corresponding solar panel (12) and the junction box (20) respectively, so as to transmit electricity transformed from the solar panel (12) to the junction box (20).

## Description

The present invention relates to a supporting structure for supporting a plurality of solar panels and a related solar tile module according to the pre-characterizing clauses of claims 1 and 9.

According to an issue of environmental consciousness, a solar panel and a traditional tile are combined to form a conventional solar tile module. The conventional solar tile module not only has functions of wind-proofing and water-proofing, but also can transform solar energy into electrical energy as an environmental-friendly building. However, a supporting structure of the conventional solar tile module is only designed for supporting single solar panel, so that dimensions of the conventional solar tile module is limited to a size of the single solar panel. Therefore, there are a lot of conventional solar tile modules utilized to fill over the housetop when laying the housetop. In addition, each solar panel is connected to a corresponding electronic element, such as a cable, a chip, a junction box, and so on, so that the conventional solar tile module is difficult to be popularized due to its expensive manufacturing cost. Thus, design of a solar tile module with few electronic elements and low manufacturing cost is an important issue in the solar panel industry.

This in mind, the present invention aims at providing a supporting structure for supporting a plurality of solar panels and a related solar tile module that not only decreases the weight of the solar tile module, but also decreases the manufacturing cost of the solar tile module.

This is achieved by providing a supporting structure for supporting a plurality of solar panels according to claim 1. The dependent claims pertain to corresponding further developments and improvements.

As will be seen more clearly from the detailed description following below, the claimed supporting structure includes a base for supporting a plurality of solar panels, and a frame disposed on the base. At least one accommodating space is formed inside the frame for accommodating the plurality of solar panels so as to fix the plurality of solar panels on the base.

In the following, the invention is further illustrated by way of example, taking reference to the accompanying drawings. Thereof
FIG.1 is a diagram of a solar tile module according a preferred embodiment of the present invention, and
FIG.2 is a diagram of a combination of a plurality of solar tile module according to the preferred embodiment of the present invention.

To provide a better understanding of the presented invention, a preferred embodiment will be explained in details. The preferred embodiment of the present invention is illustrated in the accompanying drawings with numbered elements, but application of the present invention is not limited to the preferred embodiment.

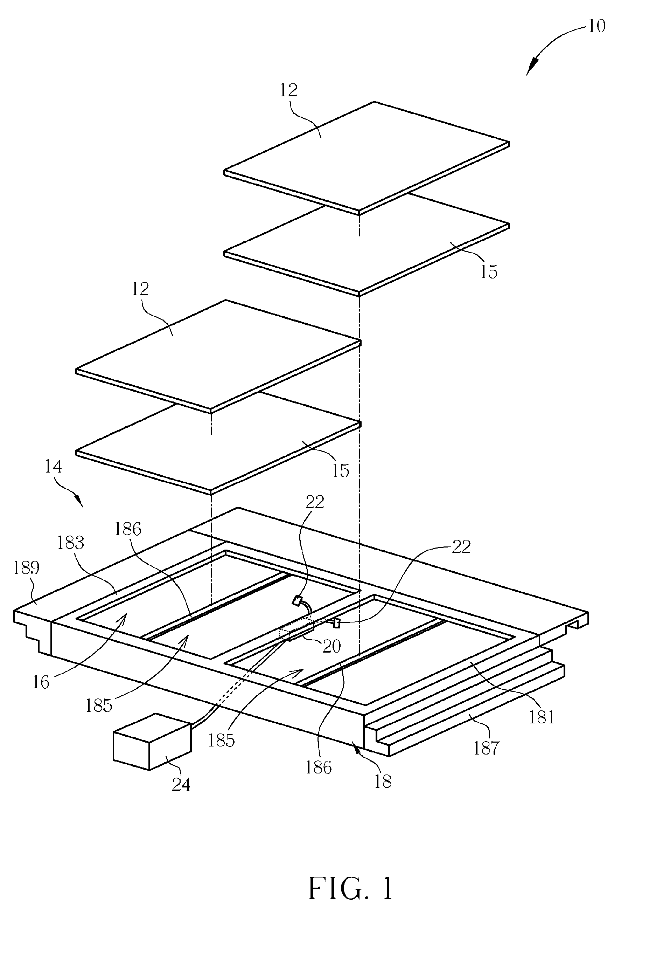

Please refer to FIG.1. FIG.1 is a diagram of a solar tile module 10 according a preferred embodiment of the present invention. The solar tile module 10 includes a plurality of solar panels 12 and a supporting structure 14. The supporting structure 14 is for supporting the plurality of solar panels 12 so as to modularize the plurality of solar panels 1 2 as a building material. For example, the supporting structure 14 can be a tile structure. The supporting structure 14 includes a base 16 for supporting the plurality of solar panels 12. The supporting structure 14 can further include at least one buffer 15 disposed between the plurality of solar panels 1 2 and the base 1 6 for absorbing vibration of the solar panel 12. The buffer 15 can be made of water-proofing material for providing a water-proofing function. The supporting structure 14 further includes a frame 18 disposed on the base 16. The frame 18 can include a plurality of lateral walls. The plurality of lateral walls are respectively disposed on edges of the corresponding base 16. For example, the plurality of lateral walls can include a first lateral wall 181, a second lateral wall 183, and the other lateral walls. As shown in FIG.1 , the first lateral wall 181 and the second lateral wall 183 are respectively disposed on two edges of the base 16 in parallel. At least one accommodating space 185 is formed inside the plurality of lateral walls of the frame 18 for accommodating the plurality of solar panels 12, so as to fix the plurality of solar panels 12 on the base 16. For example, the accommodating space 185 with two separated areas can be formed inside the frame 18 for respectively accommodating two solar panels 12. Further, the accommodating space 185 with one area can be formed inside the frame 18 for accommodating the two solar panels 1 2 together. The frame 18 can include at least one rib 186 parallel to an edge of the frame 18. The rib 186 can be a supporting component for supporting the solar panel 12, so as to improve rigidity of the frame 18, to support weight of the solar panel 1 2, to increase loading ability of the frame 18, and to promote stability of the supporting structure 14. Number and disposition of the rib 186 is not limited to the above-mentioned embodiment and depends on design demand. For example, the frame 18 can include a plurality of ribs 186 which is intersected to each other.

In addition, the supporting structure 14 further includes a junction box 20 disposed on a side of the base 16 and between the adjacent solar panels 14. The supporting structure 14 further includes a plurality of transmission cables 22. Two ends of ach transmission cable 22 are electrically connected to the corresponding solar panel 12 and the junction box 20 respectively. When the solar panel 12 transforms solar energy into electrical energy, the electricity can be transmitted from the solar panel 12 to the junction box 20 via the transmission cable 22. The solar tile module 10 can further include a battery module 24 electrically connected to the junction box 20 for storing the electricity received by the junction box 20, so as to provide the electricity to other electronic devices.

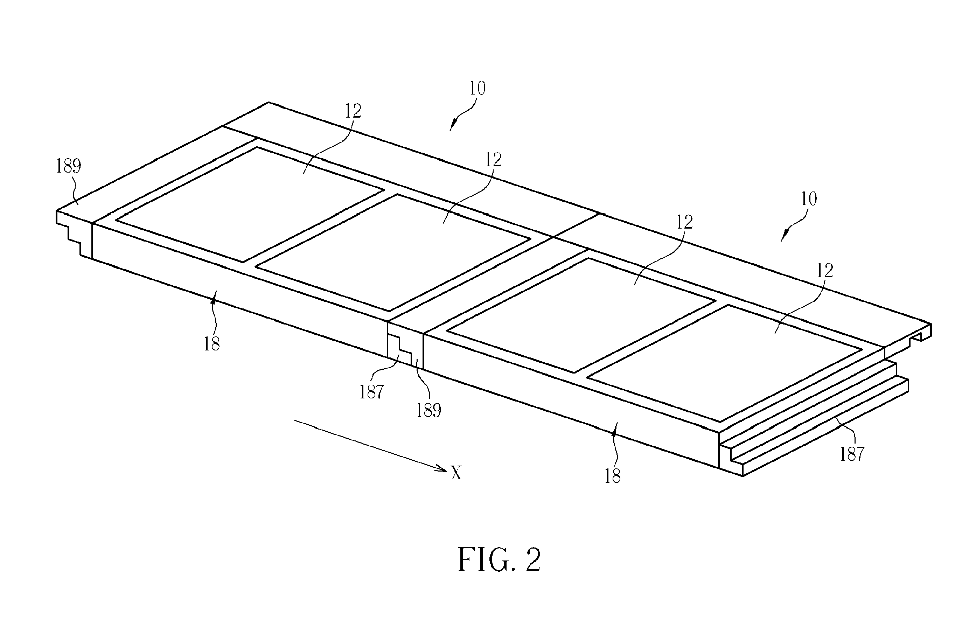

Please refer to FIG.1 and FIG.2. FIG.2 is a diagram of a combination of the plurality of solar tile modules 10 according to the preferred embodiment of the present invention. A first wedging portion 187 can be formed on an outside surface of the first lateral wall 181 of the frame 18 of each supporting structure 14, and a second wedging portion 189 can be formed on an outside surface of the second lateral wall 183 of the frame 18. As shown in FIG.2, the first wedging portion 187 and the second wedging portion 1 89 are capable of wedging with each other tightly, so that different supporting structures 14 can be combined as the combination of the solar tile modules 10 by wedging the first wedging portion 187 with the second wedging portion 189 mutually. For example, as shown in FIG.2, two solar tile modules 10 can be connected to each other by wedging the first wedging portion 187 of one of the two solar tile modules 1 0 with the second wedging portion 189 of the other one in X direction. Besides, the other lateral walls of the frame 18 of the supporting structure 14 can include corresponding wedging portions, so as to combine with different supporting structures 14 in different directions. Connecting mechanism of the plurality of supporting structures 14 is not limited to the above-mentioned embodiment and depends on design demand. For example, the supporting structure 14 can be a pentagonal structure, and each lateral side of the pentagonal structure can include a wedging portion capable of wedging with other ones tightly, so that the supporting structures 14 can be combined with each other to form the combination of the solar tile modules 10 with large size in a direction of each lateral side.

When the plurality of solar panels 12 is disposed on the supporting structure 14, because the supporting structure 14 is usually to be the building material, the buffers 15 with water-proofing function can be disposed between the plurality of solar panels 1 2 and the base 1 6. The buffer 15 not only can prevent the plurality of solar panels 1 2 from impacting the base 1 6 directly, but also can fill a gap between the plurality of solar panels 12 and the base 16 for water-proofing. Lateral walls of the solar tile module 10 can respectively include the wedging portions capable of wedging with other ones tightly, so that different solar tile modules 10 can be combined with each other tightly via the corresponding wedging portions for laying the housetop according to actual demand. In addition, because the supporting structure 14 utilizes the frame 18 formed by the plurality of lateral walls to fix the plurality of solar panels 12 on the base 16, when the plurality of solar panels 12 is accommodated inside the accommodating space 185 and fixed on the base 16, the first lateral wall 181, the second lateral wall 183, and the other lateral walls contact against the edges of the plurality of solar panels 12 tightly, so as to fix the plurality of solar panels 1 2 on the base 1 6 effectively. According to the above-mentioned embodiment, each solar tile module 10 only needs one junction box 20, which means the plurality of solar panel 12 can be electrically connected to the junction box 20 via the plurality of corresponding transmission cables 22, so as to transmit the electricity transformed by the plurality of solar panels 1 2 to the junction box 20 and the battery module 24 for decreasing the manufacturing cost of the solar tile module 10.

Comparing to the prior art, the solar tile module of the present invention utilizes the advanced supporting structure to support the plurality of solar panels. The advanced supporting structure has simple structural design and preferred loading ability, so that a user can install the solar tile module with the plurality of solar panels on the housetop of the building easily. The solar tile module of the present invention only includes one junction box for receiving the electricity transformed by the plurality of solar panels, which not only can decrease the weight of the solar tile module, but also can decrease the manufacturing cost of the solar tile module.

## Claims

1. A supporting structure (14) comprising:
a base (16) for supporting a plurality of solar panels (12);
**characterized in that** the supporting structure (14) further comprises:
a frame (18) disposed on the base (16), at least one accommodating space (185) being formed inside the frame (1 8) for accommodating the plurality of solar panels (1 2) so as to fix the plurality of solar panels (12) on the base (16);
a junction box (20) disposed on a side of the base (16) and between the adjacent solar panels (12); and
a plurality of transmission cables (22), two ends of each transmission cable (22) being electrically connected to the corresponding solar panel (12) and the junction box (20) respectively, so as to transmit electricity transformed from the solar panel (12) to the junction box (20).

2. The supporting structure (14) of claim 1, **characterized in that** the supporting structure (14) further comprises:
a battery module (24) electrically connected to the junction box (20) for storing the electricity received by the junction box (20).

3. The supporting structure (14) of claims 1 or 2, **characterized in that** the frame (18) comprises a plurality of lateral walls (1 81 , 182), the plurality of lateral walls (1 81 , 182) being respectively disposed on edges of the base (16), and the plurality of lateral walls laterally (181, 182) contacting against sides of the plurality of solar panels (12) respectively, when the plurality of solar panels (12) is disposed on the base (16).

4. The supporting structure (14) of claim 3, **characterized in that** the plurality of lateral walls (1 81 , 182) comprises a first lateral wall (181) and a second lateral wall (183), and the first lateral wall (181) and the second lateral wall (183) are respectively disposed on two edges of the base (16) in parallel.

5. The supporting structure (14) of claim 4, **characterized in that** a first wedging portion (187) is formed on an external side of the first lateral wall (181), a second wedging portion (189) is formed on an external side of the second lateral wall (183), and the first wedging portion (1 87) and the second wedging portion (1 89) are capable of wedging with each other tightly.

6. The supporting structure (14) of claims 1 , 2, 3, 4, or 5, **characterized in that** the frame (18) comprises at least one rib (186) parallel to an edge of the frame (18).

7. The supporting structure (14) of claims 1, 2, 3, 4, 5, or 6, **characterized in that** the supporting structure (14) further comprises:
a buffer (1 5) disposed between the solar panel (1 2) and the base

8. The supporting structure (1 4) of claims 1, 2, 3, 4, 5, 6, or 7, **characterized in that** the supporting structure (14) is a tile structure.

9. A solar tile module (10) comprising:
a plurality of solar panels (12); and
a supporting structure (14) comprising:
a base (16) for supporting the plurality of solar panels (12);
**characterized in that** the supporting structure (14) further comprises:
a frame (18) disposed on the base (16), at least one accommodating space (185) being formed inside the frame (18) for accommodating the plurality of solar panels (12) so as to fix the plurality of solar panels (12) on the base (16);
a junction box (20) disposed on a side of the base (16) and between the adjacent solar panels (12); and
a plurality of transmission cables (22), two ends of each transmission cable (22) being electrically connected to the corresponding solar panel (12) and the junction box (20) respectively, so as to transmit electricity transformed from the solar panel (12) to the junction box (20).

10. The solar tile module (10) of claim 9, **characterized in that** the supporting structure (14) further comprises a battery module (24) electrically connected to the junction box (20) for storing the electricity received by the junction box (20).

11. The solar tile module (10) of claims 9 or 10, **characterized in that** the frame (18) comprises a plurality of lateral walls (1 81 , 1 83), the plurality of lateral walls (1 81 , 1 83) being respectively disposed on edges of the base (16), and the plurality of lateral walls laterally (181, 183) contacting against sides of the plurality of solar panels (12) respectively, when the plurality of solar panels (12) is disposed on the base (16).

12. The solar tile module (10) of claim 11, **characterized in that** the plurality of lateral walls (1 81 , 183) comprises a first lateral wall (181) and a second lateral wall (183), and the first lateral wall and (181) the second lateral wall (183) are respectively disposed on two edges of the base (16) in parallel.

13. The solar tile module (10) of claim 12, **characterized in that** a first wedging portion (1 87) is formed on an external side of the first lateral wall (181), a second wedging portion (189) is formed on an external side of the second lateral wall (1 83), and the first wedging portion (1 87) and the second wedging portion (1 89) are capable of wedging with each other tightly.

14. The solar tile module (10) of claims 9, 10, 1 1 , 12, or 13, **characterized in that** the frame (18) comprises at least one rib (186) parallel to an edge of the frame (18).

15. The solar tile module (10) of claims 9, 1 0, 1 1 , 1 2, 13, or 14, **characterized in that** the supporting structure (14) further comprises a buffer (15) disposed between the solar panel (12) and the base (16).
